# EUROPEAN PATENT APPLICATION

(11) **EP 4 722 170 A1**
(43) Date of publication of application: **08.04.2026**
(21) Application number: 24204968.2
(22) Date of filing: 07.10.2024
(51) Int. Cl.: C03B 5/237, F23L 15/02, F27D 1/04, F28D 17/02, C21B 9/02, C21B 9/06

(54) **REFRACTORY INLAY AND CHECKER BRICK SYSTEM FOR A REGENERATOR**

(71) Applicant: Refractory Intellectual Property GmbH & Co. KG, 1100 Wien (AT)
(72) Inventor: Schneider, Michael, 35460 Staufenberg (DE); Klima, Alexander, 65205 Wiesbaden (DE); Ruth, Benedict, 65623 Hahnstätten (DE); Dietrich, Markus, 63486 Bruchköbel (DE)
(74) Representative: Eibel, Anna

(57) **Abstract**

Refractory inlay (1) for a refractory checker brick (2, 2.1, 2.2, 2.3) of a vertical regenerator (3), the refractory inlay (1) comprising a refractory inlay body (10), the refractory inlay body (10) comprising a refractory inlay body top surface (10t) and a refractory inlay body bottom surface (10b); a refractory inlay body front surface (10f) and a refractory inlay body rear surface (10r); a refractory inlay body first side surface (10.1) and a refractory inlay body second side surface (10.2); at least two refractory inlay shafts (11,12), namely a first refractory inlay shaft (11) and a second refractory inlay shaft (12), each refractory inlay shaft (11,12) comprising a refractory inlay shaft top surface (11t, 12t) and a refractory inlay shaft bottom surface (11b, 12b); a refractory inlay shaft front surface (11f, 12f) and a refractory inlay shaft rear surface (11r, 12r); a refractory inlay shaft first side surface (11.1, 12.1) and a refractory inlay shaft second side surface (11.2, 12.2); wherein the refractory inlay shaft second side surface (11.2) of the first refractory inlay shaft (11) is connected to the refractory inlay body first side surface (10.1); wherein the refractory inlay shaft first side surface (12.1) of the second refractory inlay shaft (12) is connected to the refractory inlay body second side surface (10.2); wherein the refractory inlay shaft bottom surfaces (11b, 12b) of the first refractory inlay shaft (11) and the second refractory inlay shaft (12) are configured to be suspended on a refractory checker brick top surface (2t) of a refractory checker brick (2).

## Description

The invention relates to a refractory inlay for a refractory checker brick of a vertical regenerator and a refractory checker brick system for a vertical regenerator.

The glass melting process requires large amounts of energy at high process temperatures. To use the energy as efficiently as possible, regenerators are used as heat recovery systems. Such a (vertical) regenerator is exemplary disclosed in US 2015/0210581 A1. The background state of the art is described in the book by Wolfgang Trier "Glasschmelzöfen - Konstruktion und Betriebsverhalten", 1984, Springer Verlag in Chapter 3, and especially in sub-chapter 3.3. Such vertical regenerators are filled with materials which discontinuously store and dispense heat or thermal energy, such as checker bricks, as, e.g., disclosed in EP 0 107 229 A1 or in EP 0 206 262 A1.

These regenerators are used to store waste heat from combustion cycles and reuse this heat for pre-heating the combustion air. They are heated up by flue gases from the furnace in one cycle (the so-called heat up cycle). In other words, the exhaust gases from the furnace are guided through the checkerwork structure, where they transfer part of their heat / thermal energy to the checker bricks. In this way the checkerwork structure is heated up and energy is stored.

After the checkerwork is heated up, the direction of the gas stream in the regenerator is reversed and the pre-heated checker bricks now transfer heat / thermal energy to the gas stream, thus the combustion air is preheated in the regenerator before entering the melting chamber (the so-called reverse cycle). In other words: for the reverse cycle, an external stream of fresh air is flowing in opposite direction of the flue gas flow during the heat up cycle through the regenerator, and the formerly heated checker bricks of the regenerator are now cooled down again and thereby transfer heat / thermal energy to this fresh air stream, resulting in a preheating of this gas stream (the combustion air).

The main purpose of the checkerwork is the recovery of heat / thermal energy from waste gas with the highest efficiency possible. The checkerwork consists of a stack of layers of a multitude of equal bricks (so called checker bricks), forming a three-dimensional structure with vertical channels.

The efficiency of the checkerwork for heat / thermal energy recovery depends on the geometry of the checker bricks and on the width of the channels formed by the checkerwork and the thickness of the bricks themselves. Generally, within smaller channels the relative velocity of the gas flow increases, which has a benefit in terms of heat transfer and enhances the efficiency. However, the waste gas is carrying dust and chemical compounds which can condense and form deposits in the channels. Consequently, the channels can eventually clog, which leads to a restriction in the functioning of the regenerator. Here it was found that narrower channels generally have an increased tendency for clogging.

The inventors have found that the risk of clogging is different in different areas of the regenerator. In hot areas, the risk is quite low. In colder areas, where the condensates and deposits mentioned above form, the risk of clogging is increased.

It is therefore desirable to have narrow channels in hot areas to achieve optimum efficiency for heat / thermal energy recovery and to have wider channels in colder areas to reduce the risk of clogging.

However, the fixed channel width of chimney blocks according to the prior art does not allow the channel width to be changed within a checkerwork easily and without impacting the structural integrity of the checkerwork.

It is an object of the present invention to provide a refractory inlay for a refractory checker brick and a checker brick system comprising at least one of such a refractory inlay, which allows to alter the channel width of a respective refractory checker brick easily.

The object is achieved by providing a refractory inlay for a refractory checker brick of a vertical regenerator according to claim 1 and a refractory checker brick system for a vertical regenerator according to claim 14.

In a first embodiment the object is achieved by providing a refractory inlay for a refractory checker brick of a vertical regenerator, the refractory inlay comprising:
- a refractory inlay body, the refractory inlay body comprising:
   - a refractory inlay body top surface and a refractory inlay body bottom surface;
   - a refractory inlay body front surface and a refractory inlay body rear surface;
   - a refractory inlay body first side surface and a refractory inlay body second side surface;
- at least two refractory inlay shafts, namely a first refractory inlay shaft and a second refractory inlay shaft, each refractory inlay shaft comprising:
   - a refractory inlay shaft top surface and a refractory inlay shaft bottom surface;
   - a refractory inlay shaft front surface and a refractory inlay shaft rear surface;
   - a refractory inlay shaft first side surface and a refractory inlay shaft second side surface;
- wherein the refractory inlay shaft second side surface of the first refractory inlay shaft is connected to the refractory inlay body first side surface;
- wherein the refractory inlay shaft first side surface of the second refractory inlay shaft is connected to the refractory inlay body second side surface;
- wherein the refractory inlay shaft bottom surfaces of the first refractory inlay shaft and the second refractory inlay shaft are configured to be suspended on a refractory checker brick top surface of a refractory checker brick.

In this disclosure, any top surface or bottom surface, front or rear surface, or side surface is understood as a surface delimiting a certain object, such as a three-dimensional figure, in the use position and orientation of that object. Thus, the refractory inlay body top surface delimits the refractory inlay body on its top end in the use position of the refractory inlay body, the refractory inlay body bottom surface delimits the refractory inlay body on its bottom end in the use position of the refractory inlay body. The refractory inlay body front surface delimits the refractory inlay body on its front end in the use position of the refractory inlay body, the refractory inlay body rear surface delimits the refractory inlay body on its rear end in the use position of the refractory inlay body. The refractory inlay body first side surface delimits the refractory inlay body on its first side end in the use position of the refractory inlay body, the refractory inlay body second side surface delimits the refractory inlay body on its second side end in the use position of the refractory inlay body.

The refractory inlay body may preferably resemble or be a cuboid. The refractory inlay body may preferably resemble or be a rectangular cuboid, in which case the refractory inlay body top surface and the refractory inlay body bottom surface are rectangular and congruent, the refractory inlay body front surface and the refractory inlay body rear surface are rectangular and congruent, and the refractory inlay body first side surface and the refractory inlay body second side surface are rectangular and congruent. Also, the refractory inlay body may preferably contain rounded faces, such as, e.g., the the refractory inlay body front surface and the refractory inlay body rear surface may be in the form of rounded rectangles or even in the form of circles.

Preferably, the refractory inlay body front surface and/or the refractory inlay body rear surface comprise grooves. More preferably, the refractory inlay body front surface and/or the refractory inlay body rear surface comprise at least three grooves, most preferably at least four grooves. Such grooves increase the heat transfer to the inlay body and simultaneously induce turbulences to the gas stream passing by. Generally, a groove is understood as a recess within a surface, whereas the normal distance from the surface to the deepest point of the recess defines a depth. Preferably, all grooves have a depth of at least 5 mm, more preferably of at least 10 mm. Such groove starts and ends at respective points (starting point / end point) furthest away within the groove. The groove is generally elongated within the surface, such that the length of the groove, measured from starting point to end point along the groove, is larger than its width.

Preferably, the refractory inlay body front surface and/or the refractory inlay body rear surface comprise at most seven grooves, more preferably at most six grooves. This upper limit has shown to achieve an increased heat transfer and to induce turbulences while simultaneously production of such grooves is simple.

Preferably, the grooves are parallel. Preferably, all of the grooves of the refractory inlay body front surface and/or the refractory inlay body rear surface are parallel, which allows for a homogeneous usage of the refractory inlay body front surface and/or the refractory inlay body rear surface. Preferably, all of the grooves of the refractory inlay body front surface and/or the refractory inlay body rear surface are equidistant to each other, which further fosters such homogeneous usage of the surfaces. Preferably, all grooves are linear, that is that each groove is defined by a straight, elongated recess.

Preferably, at least one of the grooves extends from the refractory inlay body bottom surface and at least one of the grooves extends to the refractory inlay body top surface. This has shown to be beneficial for the gas flow behavior and has also some effect to decrease deposition of dust or other contaminations on the refractory inlay brick.

Preferably, at least one, preferably all, interfaces between the refractory inlay body top surface and the refractory inlay body front surface, between the refractory inlay body top surface and the refractory inlay body rear surface, between the refractory inlay body bottom surface and the refractory inlay body front surface, between the refractory inlay body bottom surface and the refractory inlay body rear surface, are in the form of a bevel. These bevels have the effect to decrease the gas flow resistance, thus the pressure drop or gradient within the regenerator is decreased. The upper bevel has the additional advantage to decrease the deposition of dust or other contaminations on the refractory inlay brick.

Preferably, at least one, preferably all, interfaces between the refractory inlay body top surface and the refractory inlay body first side surface, between the refractory inlay body top surface and the refractory inlay body second side surface, between the refractory inlay body bottom surface and the refractory inlay body first side surface, between the refractory inlay body bottom surface and the refractory inlay body second side surface, are in the form of a bevel. These bevels have the effect to decrease the gas flow resistance, thus the pressure drop or gradient within the regenerator is decreased. The upper bevel has the additional advantage to decrease the deposition of dust or other contaminations on the refractory inlay brick.

Preferably, at least one of the grooves starts at an interface between the refractory inlay body top surface and the refractory inlay body front surface, or between the refractory inlay body top surface and the refractory inlay body rear surface, or between the refractory inlay body bottom surface and the refractory inlay body front surface, or between the refractory inlay body bottom surface and the refractory inlay body rear surface. This has shown to be beneficial for the gas flow behavior and has also some effect to decrease deposition of dust or other contaminations on the refractory inlay brick.

Preferably, at least one of the grooves defines a main groove direction, and wherein the main groove direction is aligned at an angle α relative to the refractory inlay body bottom surface, wherein the angle α is in the range of 15° to 85°, preferably in the range of 45° to 80°, most preferably in the range of 60° to 75°. The main groove direction is to be understood as the main direction that a gas is guided through or along the groove. The main groove direction of a linear groove is the direction of its (longest) elongation.

Preferably, the refractory inlay is configured such that the refractory inlay body can be positioned within a channel of the refractory checker brick when the refractory inlay shaft bottom surfaces are suspended on a top refractory checker brick surface of a refractory checker brick.

Preferably, the refractory inlay features a refractory inlay width delimited by the refractory inlay shaft first side surface of the first refractory inlay shaft and a refractory inlay shaft second side surface of the second refractory inlay shaft; wherein the refractory inlay body features a refractory inlay body width delimited by the refractory inlay body first side surface and the refractory inlay body second side surface; wherein the refractory inlay width is larger than a channel width of the checker brick and wherein the refractory inlay body width is smaller than the channel width of the checker brick. This allows to easily and securely position the refractory inlay within a (channel of the) checker brick.

Preferably, each of the refractory inlay shafts of the at least one refractory inlay is configured to fit within a refractory checker brick recess of a refractory checker brick. Such configuration leads to a structurally very stable checkerwork structure.

Preferably, the refractory inlay body features a refractory inlay body height delimited by the refractory inlay body top surface and the refractory inlay body bottom surface, the refractory inlay body height is in the range of 100 mm to 250 mm, preferably 120 mm to 175 mm. This range has shown to yield good thermal properties and simultaneously allows good handling of the refractory inlay during installation.

Preferably, the refractory inlay body features a refractory inlay body width delimited by the refractory inlay body first side surface and the refractory inlay body second side surface, the refractory inlay body width is in the range of 80 mm to 400 mm, preferably 120 mm to 170 mm, more preferably 140 mm to 160 mm. This range was found to fit well to existing checker designs, while also allowing good handling of the refractory inlay during installation and achieving good thermal properties. This also allows to obtain a new effective channel width of the checker brick, being easily adaptable within the checkerwork.

Preferably, the refractory inlay body features a refractory inlay body thickness delimited by the refractory inlay front surface and the refractory inlay body rear surface, the refractory inlay body thickness is in the range of 20 mm to 50 mm, preferably 25 mm to 45 mm, more preferably 30 mm to 35 mm. This range was found to yield good gas flow distributions within a checker brick and simultaneously allows for an increased storage of thermal energy in a checkerwork.

Preferably, the refractory inlay body and the at least two least two refractory inlay shafts are integrally built from a refractory material. Preferably the refractory material is selected from magnesia, chrome ore, magnesia alumina spinel, alumina, forsterite, chamotte, zirconia mullite, fused-cast AZS (alumina-zirconia-silica), fused-cast mullite, fused-cast alumina and mixtures of these materials. These materials have shown to yield good thermal and mechanical properties while providing excellent refractoriness.

In a second embodiment the object is achieved by providing a refractory checker brick system for a vertical regenerator, the refractory checker brick system comprising:
- at least one refractory inlay according to the invention;
- at least one refractory checker brick, wherein:
   - the refractory checker brick comprises a hollow refractory checker brick body being defined by a refractory checker brick wall, extending from a refractory checker brick top surface to a refractory checker brick bottom surface;
   - the refractory checker brick further comprises a refractory checker brick channel extending through the hollow refractory checker brick body, along a longitudinal axis (L) from the refractory checker brick top surface to the refractory checker brick bottom surface, the refractory checker brick channel being delimited by the refractory checker brick wall, the refractory checker brick channel featuring a refractory checker brick channel width;
   - the refractory checker brick comprising at least one refractory checker brick recess (of the refractory checker brick wall) extending from the refractory checker brick bottom surface, preferably two refractory checker brick recesses extending from the refractory checker brick bottom surface, more preferably four refractory checker brick recesses extending from the refractory checker brick bottom surface;
wherein at least one of the refractory inlay shafts of the at least one refractory inlay is positioned within a refractory checker brick recess of the refractory checker brick.

Preferably, the refractory checker brick system comprises:
- at least three checker bricks, namely a first refractory checker brick, a second refractory checker brick and a third refractory checker brick,
- wherein the first refractory checker brick and the second refractory checker brick are positioned side by side at a distance, such that the third refractory checker brick rests upon the first refractory checker brick and the second refractory checker brick,
- in that the refractory checker brick bottom surface of the third refractory checker brick rests upon the refractory checker brick top surface of the first refractory checker brick and the refractory checker brick top surface of the second refractory checker brick,
- wherein the third refractory checker brick comprises at least two refractory checker brick recesses,
- wherein both refractory inlay shafts of the at least one refractory inlay are positioned within the refractory checker brick recesses of the third refractory checker brick, and
- wherein the refractory inlay shaft bottom surface of the first refractory inlay shaft is suspended on the top refractory checker brick surface of the first refractory checker brick and
- wherein the refractory inlay shaft bottom surface of the second refractory inlay shaft is suspended on the top refractory checker brick surface of the second refractory checker brick,
- preferably the refractory inlay body is at least partially positioned within the refractory checker brick channel of the third refractory checker brick;
   OR the refractory checker brick system comprises:
   - at least three checker bricks, namely a first refractory checker brick, a second refractory checker brick and a third refractory checker brick,
   - wherein the first refractory checker brick and the second refractory checker brick are positioned side by side at a distance, such that the first refractory checker brick and the second refractory checker brick rest upon the third refractory checker brick,
   - in that the refractory checker brick bottom surface of the first refractory checker brick and the refractory checker brick bottom surface of the second refractory checker brick rest upon the refractory checker brick top surface of the third refractory checker brick,
   - wherein the first refractory checker brick comprises at least one refractory checker brick recess and wherein the second refractory checker brick comprises at least one refractory checker brick recess,
   - wherein the first refractory inlay shaft is positioned within the refractory checker brick recess of the first checker brick, and
   - wherein the second refractory inlay shaft is positioned within the refractory checker brick recess of the second checker brick, and
   - wherein the refractory inlay shaft bottom surface of the first refractory inlay shaft and the refractory inlay shaft bottom surface of the second refractory inlay shaft are suspended on the top refractory checker brick surface of the third refractory checker brick,
   - preferably the refractory inlay body is at least partially positioned within the refractory checker brick channel of the third refractory checker brick.

Generally, a refractory checker brick recess extends from the refractory checker brick bottom surface within the refractory checker brick wall. Generally, a refractory checker brick recess of the refractory checker brick wall is configured such that the respective refractory checker brick can be suspended on an underlying refractory checker brick, wherein the refractory checker brick recess may form a void between the underlying refractory checker brick and the suspended refractory checker brick wall comprising the refractory checker brick recess. The refractory checker brick recess may be configured such that a refractory inlay shaft of the refractory inlay may be positioned within a refractory checker brick recess of the respective refractory checker brick, such that when the refractory inlay shaft of the refractory inlay is suspended by the underlying refractory checker brick, the respective refractory checker brick can be suspended on the underlying refractory checker brick. In other words, the void formed between the underlying refractory checker brick and the suspended refractory checker brick wall comprising the refractory checker brick recess may be configured such that the refractory inlay shaft of the refractory inlay fits within that void. This allows to stabilize the refractory inlay shaft within the checkerwork.

Exemplary embodiments are shown in the drawings:
Fig. 1 is a diagrammatic view of a glass melting furnace with two vertical regenerators.
Fig. 2 shows a three-dimensional (3D) view of a refractory checker brick.
Fig. 3 shows a top view of a refractory inlay.
Fig. 4 shows a front view of a refractory inlay.
Fig. 5 shows a side view of a refractory inlay.
Fig. 6 shows a 3D view of a refractory inlay.

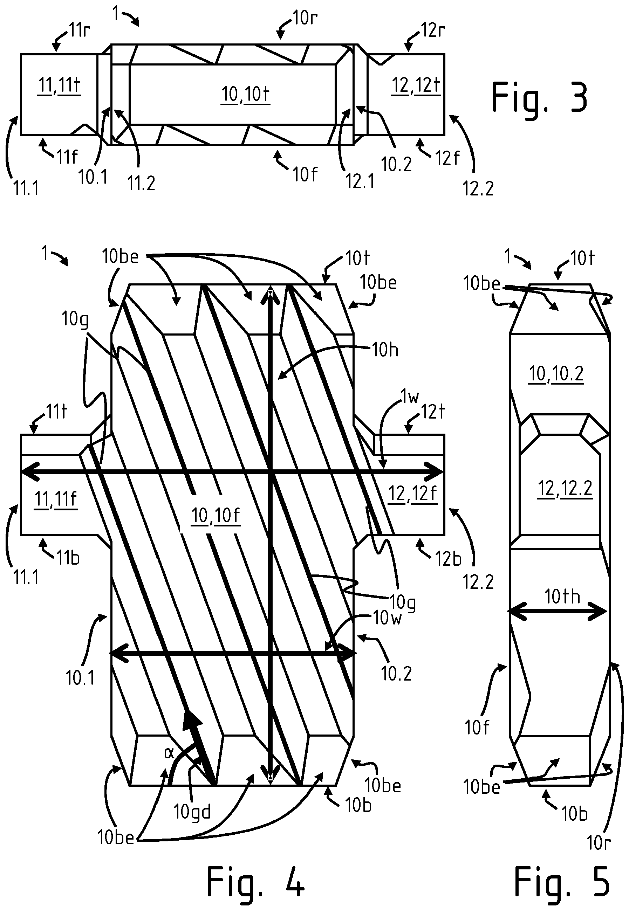

Fig. 5 shows a 3D view of a refractory checker brick.

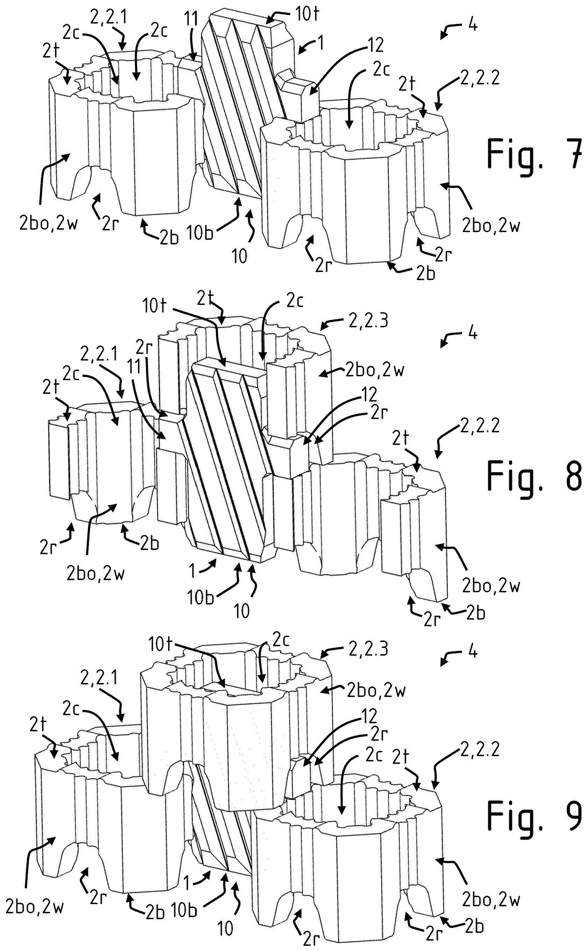

Fig. 7, 8, 9 show a schematic view of a first example of a refractory checker brick system.

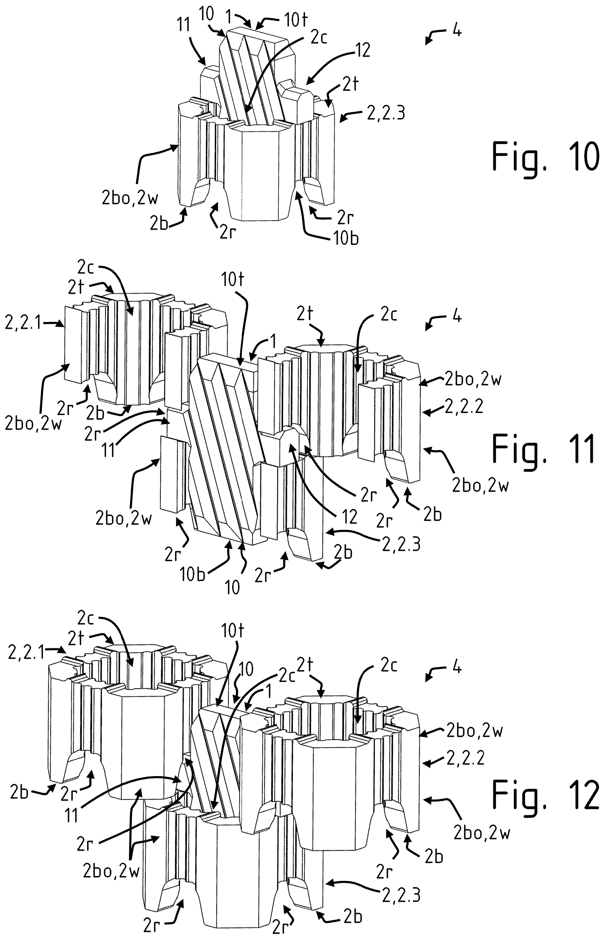

Fig. 10, 11, 12 show a schematic view of a second example of a refractory checker brick system.

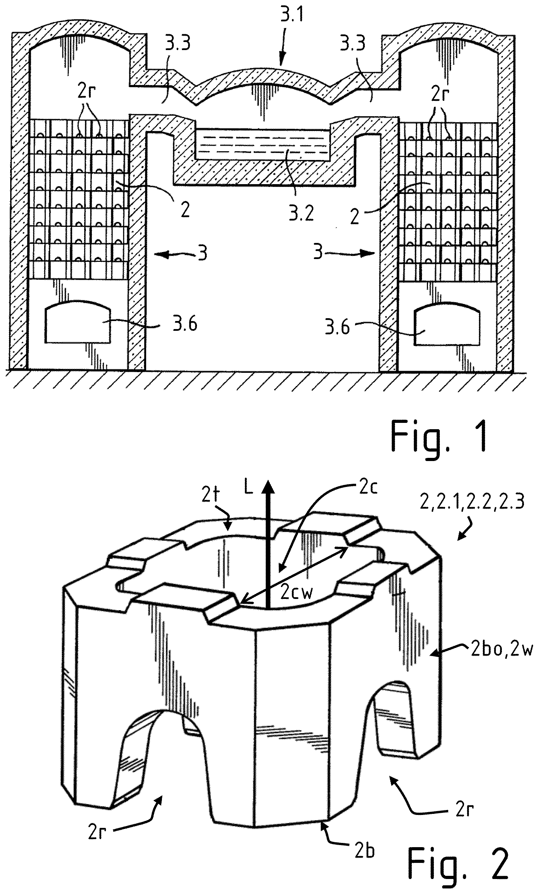

Fig. 1 shows a schematic view of a glass melting furnace according to the prior art with a melting chamber 3.1 containing a glass melt 3.2, the melting chamber 3.1 being lined with refractory material. Passages 3.3 are arranged at both sides of the melting chamber 3.1 and lead to the vertical regenerators 3. The checkerwork, comprising checker bricks 2 with brick recesses 2r, is arranged in each vertical regenerator 3. Below the checkerwork are openings 3.6 to allow for the entry and exit of the exhaust gases (heat up cycle) and fresh air stream (reverse cycle), respectively.

Fig. 2 schematically shows a refractory checker brick 2, 2.1, 2.2, 2.3 according to the prior art for a vertical regenerator 3. The refractory checker brick 2, 2.1, 2.2, 2.3 comprises a hollow refractory checker brick body 2bo being defined by a refractory checker brick wall 2w, extending from a refractory checker brick top surface 2t to a refractory checker brick bottom surface 2b. The refractory checker brick 2, 2.1, 2.2, 2.3 further comprises a refractory checker brick channel 2c extending through the hollow refractory checker brick body 2bo, along a longitudinal axis L from the refractory checker brick top surface 2t to the refractory checker brick bottom surface 2b, the refractory checker brick channel 2c being delimited by the refractory checker brick wall 2w, the refractory checker brick channel 2c featuring a refractory checker brick channel width 2cw. Here, the exemplary channel width 2cw of the checker brick 2 is 160 mm. The refractory checker brick 2, 2.1, 2.2, 2.3 of this exemplary embodiment comprises four refractory checker brick recesses 2r extending from the refractory checker brick bottom surface 2b in the refractory checker brick wall 2w.

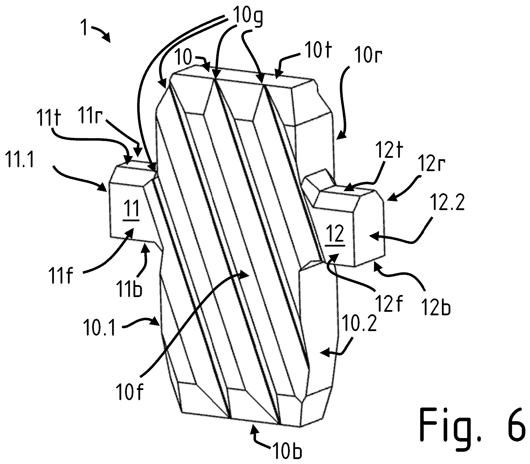

Fig. 3 to 6 shows different views of an exemplary refractory inlay 1 according to the invention. The refractory inlay 1 for a refractory checker brick 2, 2.1, 2.2, 2.3 of a vertical regenerator 3 comprises a refractory inlay body 10, which here is in the form of a rectangular cuboid. This exemplary refractory inlay body 10 comprises a refractory inlay body top surface 10t, a refractory inlay body bottom surface 10b, a refractory inlay body front surface 10f, a refractory inlay body rear surface 10r, a refractory inlay body first side surface 10.1, a refractory inlay body second side surface 10.2 and further two refractory inlay shafts 11,12, namely a first refractory inlay shaft 11 and a second refractory inlay shaft 12. Here, each refractory inlay shaft 11,12 comprises a refractory inlay shaft top surface 111, 12t, a refractory inlay shaft bottom surface 11b, 12b, a refractory inlay shaft front surface 11f, 12f, a refractory inlay shaft rear surface 11r, 12r, a refractory inlay shaft first side surface 11.1, 12.1, a refractory inlay shaft second side surface 11.2, 12.2, wherein the refractory inlay shaft second side surface 11.2 of the first refractory inlay shaft 11 is connected to the refractory inlay body first side surface 10.1 and wherein the refractory inlay shaft first side surface 12.1 of the second refractory inlay shaft 12 is connected to refractory inlay body second side surface 10.2. The refractory inlay shaft bottom surfaces 11b, 12b of the first refractory inlay shaft 11 and the second refractory inlay shaft 12 are configured to be suspended on a refractory checker brick top surface 2t of a refractory checker brick 2. In this example, the refractory inlay body front surface 10f and the refractory inlay body rear surface 10r each comprise four linear, parallel and equidistant grooves 10g. Here, two of the grooves 10g extend from the refractory inlay body bottom surface 10b and two of the grooves 10g extend to the refractory inlay body top surface 10t. In this example, all interfaces between the refractory inlay body top surface 10t and the refractory inlay body front surface 10f, between the refractory inlay body top surface 10t and the refractory inlay body rear surface 10r, between the refractory inlay body bottom surface 10b and the refractory inlay body front surface 10f, between the refractory inlay body bottom surface 10b and the refractory inlay body rear surface 10r, are in the form of a bevel 10be. Here also all interfaces between the refractory inlay body top surface 10t and the refractory inlay body first side surface 10.1, between the refractory inlay body top surface 10t and the refractory inlay body second side surface 10.2, between the refractory inlay body bottom surface 10b and the refractory inlay body first side surface 10.1, between the refractory inlay body bottom surface 10b and the refractory inlay body second side surface 10.2, are in the form of a bevel 10be. In this example, two of the grooves 10g start at an interface between the refractory inlay body top surface 10t and the refractory inlay body front surface 10f, two of the grooves 10g start at an interface between the refractory inlay body top surface 10t and the refractory inlay body rear surface 10r, another two grooves 10g start at an interface between the refractory inlay body bottom surface 10b and the refractory inlay body front surface 10f, and two of the grooves 10g start at an interface between the refractory inlay body bottom surface 10b and the refractory inlay body rear surface 10r. The grooves 10g define a main groove direction 10gd, wherein the main groove direction 10gd is aligned at an angle α relative to the refractory inlay body bottom surface 10b, wherein the angle α is exemplarily 70° here. Here the refractory inlay 1 is configured such that the refractory inlay body 10 can be positioned within a channel 2c of the refractory checker brick 2, 2.1, 2.2, 2.3, when the refractory inlay shaft bottom surfaces 11b, 12b are suspended on a top refractory checker brick surface 2t of a refractory checker brick 2. The refractory inlay 1 features a refractory inlay width 1w delimited by the refractory inlay shaft first side surface 11.1 of the first refractory inlay shaft 11 and a refractory inlay shaft second side surface 12.2 of the second refractory inlay shaft 12 and the refractory inlay body 10 features a refractory inlay body width 10w delimited by the refractory inlay body first side surface 10.1 and the refractory inlay body second side surface 10.2. In this example, the refractory inlay width 1w is larger than a channel width 2cw of the checker brick 2, 2.1, 2.2, 2.3 and the refractory inlay body width 10w is smaller than the channel width 2cw of the checker brick 2. Also, here each of the refractory inlay shafts 11,12 of the refractory inlay 1 is configured to fit within a refractory checker brick recess 2r of the refractory checker brick 2. The exemplary refractory inlay body 10 features a refractory inlay body height 10h delimited by the refractory inlay body top surface 10t and the refractory inlay body bottom surface 10b, of 150 mm. The exemplary refractory inlay body 10 features a refractory inlay body width 10w delimited by the refractory inlay body first side surface 10.1 and the refractory inlay body second side surface 10.2 of 150 mm. The exemplary refractory inlay body 10 also features a refractory inlay body thickness 10th delimited by the refractory inlay front surface 10f and the refractory inlay body rear surface 10r of 30 mm. The refractory inlay body 10 and the two refractory inlay shafts 11,12 are integrally built from a refractory material, the refractory materials is magnesia in this example.

In Fig. 7, 8, 9 schematic views of a first example of a checker brick system 4 for a vertical regenerator 3 according to the invention are shown, which comprises one refractory inlay 1 as described above and three refractory checker bricks 2, 2.1, 2.2, 2.3, similar to the checker brick 2, 2.1, 2.2, 2.3 as described above. Here the two refractory inlay shafts 11, 12 of the refractory inlay 1 are positioned within refractory checker brick recesses 2r of refractory checker bricks 2, 2.1, 2.2, 2.3. This example contains three checker bricks 2, 2.1, 2.2, 2.3, namely a first refractory checker brick 2.1, a second refractory checker brick 2.2 and a third refractory checker brick 2.3. The first refractory checker brick 2.1 and the second refractory checker brick 2.2 are positioned side by side at a distance, such that the third refractory checker brick 2.3 rests upon the first refractory checker brick 2.1 and the second refractory checker brick 2.2, in that the refractory checker brick bottom surface 2b of the third refractory checker brick 2.3 rests upon the refractory checker brick top surface 2t of the first refractory checker brick 2.1 and the refractory checker brick top surface 2t of the second refractory checker brick 2.2. Here, the third refractory checker brick 2.3 comprises four refractory checker brick recesses 2r, wherein both refractory inlay shafts 11, 12 of the refractory inlay 1 are positioned within refractory checker brick recesses 2r of the third refractory checker brick 2.3. The refractory inlay shaft bottom surface 11b of the first refractory inlay shaft 11 is suspended on the top refractory checker brick surface 2t of the first refractory checker brick 2.1, and the refractory inlay shaft bottom surface 12b of the second refractory inlay shaft 12 is suspended on the top refractory checker brick surface 2t of the second refractory checker brick 2.2. Here, the refractory inlay body 10 is partially positioned within the refractory checker brick channel 2c of the third refractory checker brick 2.3. Thus, the channel width 2cw of the third refractory checker brick 2.3 is reduced by the refractory inlay body thickness 10th. In this example, the original channel width 2cw of the third refractory checker brick 2.3 of 160 mm is reduced by the refractory inlay body thickness 10th of 30 mm, yielding two resulting channels 2c, each with a channel width of 65 mm. By using different refractory inlay body thicknesses 10th, the channel width 2cw of the resulting channels 2c can be easily adjusted.

In Fig. 10, 11, 12 a schematic view of a second example of a checker brick system 4 for a vertical regenerator 3 according to the invention is shown, which comprises one refractory inlay 1 as described above and three refractory checker bricks 2, 2.1, 2.2, 2.3, similar to the checker brick 2, 2.1, 2.2, 2.3 as described above. Here the two refractory inlay shafts 11, 12 of the refractory inlay 1 are positioned within refractory checker brick recesses 2r of the refractory checker bricks 2, 2.1, 2.2, 2.3. This example contains three checker bricks 2, 2.1, 2.2, 2.3, namely a first refractory checker brick 2.1, a second refractory checker brick 2.2 and a third refractory checker brick 2.3. The first refractory checker brick 2.1 and the second refractory checker brick 2.2 are positioned side by side at a distance, such that the first refractory checker brick 2.1 and the second refractory checker brick 2.2 rest upon the third refractory checker brick 2.3, in that the refractory checker brick bottom surface 2b of the first refractory checker brick 2.1 and the refractory checker brick bottom surface 2b of the second refractory checker brick 2.2 rest upon the refractory checker brick top surface 2t of the third refractory checker brick 2.3, Here, the first refractory checker brick 2.1 comprises four refractory checker brick recesses 2r and the second refractory checker brick 2.2 also comprises four refractory checker brick recesses 2r. In this example, the first refractory inlay shaft 11 is positioned within the refractory checker brick recess 2r of the first checker brick 2.1, and the second refractory inlay shaft 12 is positioned within the refractory checker brick recess 2r of the second checker brick 2.2, and the refractory inlay shaft bottom surface 11b of the first refractory inlay shaft 11 and the refractory inlay shaft bottom surface 12b of the second refractory inlay shaft 12 are suspended on the top refractory checker brick surface 2t of the third refractory checker brick 2.3. Here, the refractory inlay body 10 is partially positioned within the refractory checker brick channel 2c of the third refractory checker brick 2.3. Thus, the channel width 2cw of the third refractory checker brick 2.3 is reduced by the refractory inlay body thickness 10th. In this example, the original channel width 2cw of the third refractory checker brick 2.3 of 160 mm is reduced by the refractory inlay body thickness 10th of 30 mm, yielding two resulting channels 2c, each with a channel width of 65 mm. By using different refractory inlay body thicknesses 10th, the channel width 2cw of the resulting channels 2c can be easily adjusted.

### List of reference numerals:

- 1: refractory inlay
- 2: refractory checker brick
- 2.1: first refractory checker brick
- 2.2: second refractory checker brick
- 2.3: third refractory checker brick
- 2bo: refractory checker brick body
- 2w: refractory checker brick wall
- 2t: refractory checker brick top surface
- 2b: refractory checker brick bottom surface
- 2c: refractory checker brick channel
- 2cw: refractory checker brick channel width
- 2r: refractory checker brick recess
- 3: vertical regenerator
- 3.1: melting chamber
- 3.2: glass melt
- 3.3: passages
- 3.6: openings
- 4: checker brick system
- 10: refractory inlay body
- 10t: refractory inlay body top surface
- 10b: refractory inlay body bottom surface
- 10f: refractory inlay body front surface
- 10r: refractory inlay body rear surface
- 10.1: refractory inlay body first side surface
- 10.2: refractory inlay body second side surface
- 10g: grooves
- 10v: refractory inlay body volume
- 10h: refractory inlay body heigh
- 10w: refractory inlay body width
- 10th: refractory inlay body thickness
- 10be: bevel
- 11: first refractory inlay shaft
- 11t: refractory inlay shaft top surface of first refractory inlay shaft
- 11b: refractory inlay shaft bottom surface of first refractory inlay shaft
- 11f: refractory inlay shaft front surface of first refractory inlay shaft
- 11r: refractory inlay shaft rear surface of first refractory inlay shaft
- 11.1: refractory inlay shaft first side surface of first refractory inlay shaft
- 11.2: refractory inlay shaft second side surface of first refractory inlay shaft
- 12: second refractory inlay shaft
- 12t: refractory inlay shaft top surface of second refractory inlay shaft
- 12b: refractory inlay shaft bottom surface of second refractory inlay shaft
- 12f: refractory inlay shaft front surface of second refractory inlay shaft
- 12r: refractory inlay shaft rear surface of second refractory inlay shaft
- 12.1: refractory inlay shaft first side surface of second refractory inlay shaft
- 12.2: refractory inlay shaft second side surface of second refractory inlay shaft
- L: longitudinal axis

## Claims

1. Refractory inlay (1) for a refractory checker brick (2, 2.1, 2.2, 2.3) of a vertical regenerator (3), the refractory inlay (1) comprising:
1.1 a refractory inlay body (10), the refractory inlay body (10) comprising:
1.1.1 a refractory inlay body top surface (10t) and a refractory inlay body bottom surface (10b);
1.1.2 a refractory inlay body front surface (10f) and a refractory inlay body rear surface (10r);
1.1.3 a refractory inlay body first side surface (10.1) and a refractory inlay body second side surface (10.2);
1.2 at least two refractory inlay shafts (11,12), namely a first refractory inlay shaft (11) and a second refractory inlay shaft (12), each refractory inlay shaft (11,12) comprising:
1.2.1 a refractory inlay shaft top surface (11t, 12t) and a refractory inlay shaft bottom surface (11b, 12b);
1.2.2 a refractory inlay shaft front surface (11f, 12f) and a refractory inlay shaft rear surface (11r, 12r);
1.2.3 a refractory inlay shaft first side surface (11.1, 12.1) and a refractory inlay shaft second side surface (11.2, 12.2);
1.3 wherein the refractory inlay shaft second side surface (11.2) of the first refractory inlay shaft (11) is connected to the refractory inlay body first side surface (10.1);
1.4 wherein the refractory inlay shaft first side surface (12.1) of the second refractory inlay shaft (12) is connected to the refractory inlay body second side surface (10.2);
1.5 wherein the refractory inlay shaft bottom surfaces (11b, 12b) of the first refractory inlay shaft (11) and the second refractory inlay shaft (12) are configured to be suspended on a refractory checker brick top surface (2t) of a refractory checker brick (2).

2. Refractory inlay (1) according to claim 1, wherein the refractory inlay body front surface (10f) and/or the refractory inlay body rear surface (10r) comprise grooves (10g).

3. Refractory inlay (1) according to any of claims 1 to 2, wherein each of the refractory inlay body front surface (10f) and/or the refractory inlay body rear surface (10r) comprises at least three grooves (10g, 11g), more preferably at least four grooves (10g).

4. Refractory inlay (1) according to any of claims 1 to 3, wherein each of the refractory inlay body front surface (10f) and/or the refractory inlay body rear surface (10r) comprise at most seven grooves (10g), more preferably at most six grooves (10g).

5. Refractory inlay (1) according to any of claims 2 to 4, wherein all of the grooves (10g) of the refractory inlay body front surface (10f) and/or the refractory inlay body rear surface (10r) are parallel.

6. Refractory inlay (1) according to any of claims 2 to 5, wherein at least one of the grooves (10g) extends from the refractory inlay body bottom surface (10b, 11b) and wherein at least one of the grooves (10g) extends to the refractory inlay body top surface (10t, 111).

7. Refractory inlay (1) according to any of claims 1 to 6, wherein at least one, preferably all, interfaces between the refractory inlay body top surface (10t) and the refractory inlay body front surface (10f), between the refractory inlay body top surface (10t) and the refractory inlay body rear surface (10r), between the refractory inlay body bottom surface (10b) and the refractory inlay body front surface (10f), between the refractory inlay body bottom surface (10b) and the refractory inlay body rear surface (10r), are in the form of a bevel (10be).

8. Refractory inlay (1) according to any of claims 2 to 7, wherein at least one of the grooves (10g) defines a main groove direction (10gd), and wherein the main groove direction (10gd) is aligned at an angle α relative to the refractory inlay body bottom surface (10b, 11b), wherein the angle α is in the range of 15° to 85°, preferably in the range of 45° to 80°, most preferably in the range of 60° to 75°.

9. Refractory inlay (1) according to any of claims 1 to 8, wherein the refractory inlay (1) is configured such that the refractory inlay body (10) can be positioned within a channel (2c) of the refractory checker brick (2, 2.1, 2.2, 2.3) when the refractory inlay shaft bottom surfaces (11b, 12b) are suspended on a top refractory checker brick surface (2t) of a refractory checker brick (2).

10. Refractory inlay (1) according to any of claims 1 to 9, wherein the refractory inlay (1) features a refractory inlay width (1w) delimited by the refractory inlay shaft first side surface (11.1) of the first refractory inlay shaft (11) and a refractory inlay shaft second side surface (12.2) of the second refractory inlay shaft (12); wherein the refractory inlay body (10) features a refractory inlay body width (10w) delimited by the refractory inlay body first side surface (10.1) and the refractory inlay body second side surface (10.2); wherein the refractory inlay width (1w) is larger than a channel width (2cw) of the checker brick (2, 2.1, 2.2, 2.3) and wherein the refractory inlay body width (10w) is smaller than the channel width (2cw) of the checker brick (2).

11. Refractory inlay (1) according to any of claims 1 to 10, wherein each of the refractory inlay shafts (11,12) of the at least one refractory inlay (1) is configured to fit within a refractory checker brick recess (2r) of a refractory checker brick (2).

12. Refractory inlay (1) according to any of claims 1 to 11, wherein the refractory inlay body (10) features a refractory inlay body thickness (10th) delimited by the refractory inlay front surface (10f) and the refractory inlay body rear surface (10r), the refractory inlay body thickness (10th) is in the range of 20 mm to 50 mm, preferably 25 mm to 45 mm, more preferably 30 mm to 35 mm.

13. Refractory inlay (1) according to any of claims 1 to 12, wherein the refractory inlay body (10) and the at least two least two refractory inlay shafts (11,12) are integrally built from a refractory material, preferably the refractory material is selected from magnesia, chrome ore, magnesia alumina spinel, alumina, forsterite, chamotte, zirconia mullite, fused-cast AZS (alumina-zirconia-silica), fused-cast mullite, fused-cast alumina and mixtures of these materials.

14. Refractory checker brick system (4) for a vertical regenerator (3), the refractory checker brick system (4) comprising:
14.1 at least one refractory inlay (1) according to any of the preceding claims;
14.2 at least one refractory checker brick (2, 2.1, 2.2, 2.3), wherein:
14.2.1 the refractory checker brick (2, 2.1, 2.2, 2.3) comprises a hollow refractory checker brick body (2bo) being defined by a refractory checker brick wall (2w), extending from a refractory checker brick top surface (2t) to a refractory checker brick bottom surface (2b);
14.2.2 the refractory checker brick (2, 2.1, 2.2, 2.3) further comprises a refractory checker brick channel (2c) extending through the hollow refractory checker brick body (2bo), along a longitudinal axis (L) from the refractory checker brick top surface (2t) to the refractory checker brick bottom surface (2b), the refractory checker brick channel (2c) being delimited by the refractory checker brick wall (2w), the refractory checker brick channel (2c) featuring a refractory checker brick channel width (2cw);
14.2.3 the refractory checker brick (2, 2.1, 2.2, 2.3) comprising at least one refractory checker brick recess (2r) extending from the refractory checker brick bottom surface (2b), preferably two refractory checker brick recesses (2r) extending from the refractory checker brick bottom surface (2b), more preferably four refractory checker brick recesses (2r) extending from the refractory checker brick bottom surface (2b);
14.3 wherein at least one of the refractory inlay shafts (11, 12) of the at least one refractory inlay (1) is positioned within a refractory checker brick recess (2r) of the refractory checker brick (2, 2.1, 2.2, 2.3).

15. Refractory checker brick system (4) according to claim 14, wherein
15.1 the refractory checker brick system (4) comprises:
15.1.1 at least three checker bricks (2, 2.1, 2.2, 2.3), namely a first refractory checker brick (2.1), a second refractory checker brick (2.2) and a third refractory checker brick (2.3),
15.1.2 wherein the first refractory checker brick (2.1) and the second refractory checker brick (2.2) are positioned side by side at a distance, such that the third refractory checker brick (2.3) rests upon the first refractory checker brick (2.1) and the second refractory checker brick (2.2),
15.1.3 in that the refractory checker brick bottom surface (2b) of the third refractory checker brick (2.3) rests upon the refractory checker brick top surface (2t) of the first refractory checker brick (2.1) and the refractory checker brick top surface (2t) of the second refractory checker brick (2.2),
15.1.4 wherein the third refractory checker brick (2.3) comprises at least two refractory checker brick recesses (2r),
15.1.5 wherein both refractory inlay shafts (11, 12) of the at least one refractory inlay (1) are positioned within the refractory checker brick recesses (2r) of the third refractory checker brick (2.3), and
15.1.6 wherein the refractory inlay shaft bottom surface (11b) of the first refractory inlay shaft (11) is suspended on the top refractory checker brick surface (2t) of the first refractory checker brick (2.1) and
15.1.7 wherein the refractory inlay shaft bottom surface (12b) of the second refractory inlay shaft (12) is suspended on the top refractory checker brick surface (2t) of the second refractory checker brick (2.2),
15.1.8 preferably the refractory inlay body (10) is at least partially positioned within the refractory checker brick channel (2c) of the third refractory checker brick (2.3);
OR
15.2 the refractory checker brick system (4) comprises:
15.2.1 at least three checker bricks (2, 2.1, 2.2, 2.3), namely a first refractory checker brick (2.1), a second refractory checker brick (2.2) and a third refractory checker brick (2.3),
15.2.2 wherein the first refractory checker brick (2.1) and the second refractory checker brick (2.2) are positioned side by side at a distance, such that the first refractory checker brick (2.1) and the second refractory checker brick (2.2) rest upon the third refractory checker brick (2.3),
15.2.3 in that the refractory checker brick bottom surface (2b) of the first refractory checker brick (2.1) and the refractory checker brick bottom surface (2t) of the second refractory checker brick (2.2) rest upon the refractory checker brick top surface (2b) of the third refractory checker brick (2.3),
15.2.4 wherein the first refractory checker brick (2.1) comprises at least one refractory checker brick recess (2r) and wherein the second refractory checker brick (2.2) comprises at least one refractory checker brick recess (2r),
15.2.5 wherein first refractory inlay shaft (11) is positioned within the refractory checker brick recess (2r) of the first checker brick (2.1), and
15.2.6 wherein the second refractory inlay shaft (12) is positioned within the refractory checker brick recess (2r) of the second checker brick (2.2), and
15.2.7 wherein the refractory inlay shaft bottom surface (11b) of the first refractory inlay shaft (11) and the refractory inlay shaft bottom surface (12b) of the second refractory inlay shaft (12) are suspended on the top refractory checker brick surface (2t) of the third refractory checker brick (2.3),
15.2.8 preferably the refractory inlay body (10) is at least partially positioned within the refractory checker brick channel (2c) of the third refractory checker brick (2.3).
